# EUROPÄISCHE PATENTSCHRIFT

(11) **EP 0 811 030 B1**
(45) Veröffentlichungstag und Bekanntmachung des Hinweises auf die Patenterteilung: **29.09.1999**
(21) Anmeldenummer: 96902995.8
(22) Anmeldetag: 23.02.1996
(51) Int. Cl.: C08G 69/16, C08G 69/46

(54) **VERFAHREN UND VORRICHTUNG ZUR HERSTELLUNG VON HOCHVISKOSEN ODER HOCHSTABILISIERTEN, REAKTIONSSTABILEN POLYAMIDEN UND ZUR KONTINUIERLICHEN ENTMONOMERISIERUNG VON POLYAMIDEN**
PROCESS AND DEVICE FOR PRODUCING HIGH-VISCOSITY OR HIGHLY STABILIZED REACTION-STABLE POLYAMIDES, AND FOR CONTINUOUSLY DEMONOMERIZING POLYAMIDES
PROCEDE ET DISPOSITIF DE PRODUCTION DE POLYAMIDES STABLES A LA REACTION TRES VISQUEUX OU HAUTEMENT STABILISES ET DE DEMONOMERISATION CONTINUE DE POLYAMIDES

(30) Priorität: 23.02.1995 DE 19506407
(43) Veröffentlichungstag der Anmeldung: 10.12.1997
(73) Patentinhaber: Polymer Engineering GmbH, 07407 Rudolstadt (DE)
(72) Erfinder: WILTZER, Karl-Heinz, D-07422 Bad Blankenburg (DE); EBERT, Baldur, D-07422 Bad Blankenburg (DE); BRÜTTING, Hans, D-07407 Rudolstadt (DE); LAUSMANN, Peter, D-07407 Rudolstadt (DE)
(74) Vertreter: Feldkamp, Rainer, Dipl.-Ing.
(86) Internationale Anmeldenummer: EP9600754
(87) Internationale Veröffentlichungsnummer: WO9626235

(56) Entgegenhaltungen:
- EP-A- 0 074 025
- EP-A- 0 094 435
- EP-A- 0 530 592
- US-A- 3 458 482
- PATENT ABSTRACTS OF JAPAN vol. 003, no. 068 (C-048), 13.Juni 1979 & JP,A,54 041995 (UNITIKA LTD), 3.April 1979,
- PATENT ABSTRACTS OF JAPAN vol. 003, no. 157 (C-068), 22.Dezember 1979 & JP,A,54 133598 (UNITIKA LTD), 17.Oktober 1979,

## Beschreibung

Der Erfindung bezieht sich auf ein Verfahren und die Vorrichtung zur Durchführung des Verfahrens zur Herstellung von hochviskosen oder hochstabilisierten, reaktionsstabilen Polyamiden, insbesondere von Polyamid 6 mit reaktionsbereiten Amino-Endgruppen<50 µÄ/g und zur kontinuierlichen Entmonomerisierung von Polyamiden.

Hochviskoses Polyamid kann diskontinuierlich in Autoklaven und kontinuierlich in Polymerisationsreaktoren hergestellt werden. Mit diesen Verfahren ist aber nur eine maximale Lösungsviskosität von 3,4 einstellbar (Lösungsviskosität bezogen auf Polymer-Schwefelsäurelösung mit 1 g Polyamid in 100 ml 96 %-iger Säure). Es gibt aber auch Verfahren, bei denen Polyamid-Granulat unterhalb des Polyamid-Schmelzpunktes mit Stickstoff bei Temperaturen im Bereich von 140-190°C und bei Verweilzeiten von 20-60 h nachkondensiert wird. Diese Verfahren haben den Nachteil, daß die Einstellung hoher Viskositäten sehr viel Zeit beansprucht und sie daher nicht wirtschaftlich sind. In der Patentschrift DE 3923061 wird ein derartiges Verfahren für die Polyamid-6-Nachkondensation beschrieben, bei welchem das Polyamid-Granulat über 35 h in einer Temperzone behandelt wird.

Die US-PS 3 548 482 beschreibt ein Verfahren zur kontinuierlichen Polymerisation von Caprolactam, das gegenüber bekannten Verfahren in kürzerer Zeit zu einem hohen Polymerisationsgrad führt. Bei diesem Verfahren wird ein Inertgas zur Austreibung von Wasser aus dem Reaktionsgemisch eingesetzt.

Es ist jedoch bekannt, daß sich während der Polykondensation von ε-Caprolactam zu Polyamid bei der betrieblich üblichen Reaktionstemperatur von 240-280°C ein Gleichgewicht einstellt, das einen wasserlöslichen Anteil von ca. 10-13 % zur Folge hat. Das Gleichgewicht ist temperaturabhängig, mit steigender Temperatur nimmt der Monomerengehalt zu. Copolyamide, deren Teilausgangsprodukt ε-Caprolactam ist, enthalten ebenfalls einen Monomerenanteil im chemischen Gleichgewicht. Für die Weiterverarbeitung des Granulats ist es notwendig, den Monomerenanteil zu senken. Dazu gibt es die Verfahren:
- Extraktion des Granulates mit Heißwasser und solche zur
- Entmonomerisierung der Schmelze unter Vakuum.

Die heute vorwiegend angewandte wäßrige Extraktion ist vom technischen und wirtschaftlichen Standpunkt aus gesehen aufwendig, da die Schritte Ausspinnen und Abkühlen der Polyamid-6-Schmelze in Bandform, Zerkleinern der Bänder in Granulat, Extraktion des Granulates, Trocknen des Granulates und Rückführung des Granulates in den geschmolzenen Zustand durchgeführt werden müssen. Dieses Verfahren der Extraktion mit Heißwasser kann diskontinuierlich und kontinuierlich durchgeführt werden. Es wird großtechnisch von allen Polyamid-6-Herstellern genutzt.

Im Gegensatz hierzu kann bei der Vakuumentmonomerisierung der Weg über das Granulat entfallen. Die aus dem Polykondensationsreaktor kommende Schmelze durchläuft kontinuierlich die Entmonomerisierungsstufe und wird anschließend direkt der Spinneinrichtung zugeführt.

In der Patentschrift US 3578640 wird ein Verfahren zur Entmonomerisierung der PA-Schmelze mittels Vakuum beschrieben. Bei diesem Verfahren wird nach der Vakuumstufe ein sehr hoher technischer Aufwand für den Austrag der Schmelze und dem nachgeschalteten Finisher zur weiteren Extraktabsenkung betrieben. Diese Technik, beispielsweise Wellenabdichtungen führen zwangsläufig zu Undichtheiten im Vakuumsystem und einer damit verbundenen oxidativen Schädigung der Schmelze durch eingedrungenen Luftsauerstoff. Auch die Einspeisung von Inertgasen, insbesondere Stickstoff, kann die oxidative Schädigung nicht unterdrücken.

Der Erfindung liegt die Aufgabe zugrunde, ein Verfahren und eine Vorrichtung für die Durchführung des Verfahrens der eingangs genannten Art zu schaffen, das in einfacher Weise die Herstellung von hochviskosen oder hochstabilisierten, reaktionsstabilen Polyamiden und falls erforderlich eine Entmonomerisierung ermöglicht. Dabei wird im Prozeß von einer ursprünglich annähernd im chemischen Gleichgewicht befindlichen Schmelze ausgegangen. Es soll ein sich nicht im chemischen Gleichgewicht befindliches Polymerisat hergestellt werden, das aber aufgrund der sehr niedrigen Amino- und Carboxylendgruppen sehr stabil ist und dadurch kaum nachkondensiert.

Diese Aufgabe wird durch die im Patentanspruch 1 angegebenen Merkmale gelöst. Vorteilhafte Ausgestaltungen und Weiterbildungen der Erfindung ergeben sich aus den Unteransprüchen.

Erfindungsgemäß wird die Schmelze kontinuierlich in den Reaktionsbehälter eingetragen und mit vorgewärmten Stickstoff in innige Berührung und/oder Vermischung gebracht und eine definierte Verweilzeit der Schmelze in einem Sumpf im unteren Teil des Reaktionsbehälters vor deren kontinuierlichen Austrag eingestellt, wobei ausgetriebene Stoffe über Rohrleitungen gesammelt werden und insbesondere bei der Herstellung von Polyamid 6 ausgetriebenes Caprolactam über Rohrleitungen in einen Sammelbehälter eingebracht, stetig umgewälzt einer Polymerisationsstufe zugeführt wird.

Die Polyamidschmelze wird im Reaktionsbehälter über oberflächenvergrößernde und gleichzeitig oberflächenerneuernde Elemente und/oder in einen Schmelzesumpf über einer oder mehreren horizontalen Trenneinrichtungen mit Durchbrüchen geleitet und mit vorgewärmten Stickstoff beaufschlagt.

Der vor seinem Eintritt in den Reaktionsbehälter vorzugsweise auf 150 - 300°C vorgewärmte Stickstoff, wird oberhalb des Niveaus des im unteren Teil des Reaktionsbehälters befindlichen Schmelzesumpfes und - wenn vorhanden - unterhalb einer Trenneinrichtung in den Reaktionsbehälter eingebracht. Der Stickstoff wird im Reaktionsbehälter durch eine über einer Trenneinrichtung mit Durchbrüchen befindliche Schmelzeschicht gedrückt.

Die der Reaktion ausgesetzte Schmelze wird über mindestens ein Überlaufrohr, welches vertikal durch die Trenneinrichtung bis in den Schmelzesumpf am Reaktionsbehälterboden reicht, dem Sumpf im unteren Teil des Reaktionsbehälters zugeführt. Kommen dabei zusätzlich oberflächenvergrößernde Elemente zur Anwendung, werden diese mit Stickstoff nach dessen Austritt aus der Schmelzeschicht beaufschlagt.

Während der Erzeugung hoher Viskositäten und Stabilitäten und gegebenenfalls der Entmonomerisierung wird zur Homogenisierung der Schmelze in jeder Stufe ein Schmelzesumpf eingestellt, die Verweilzeit der Schmelze im Sumpf beträgt ≤ 30 min. Die auf diese Weise durchgeführte Homogenisierung bringt den Vorteil, daß Unterschiede im Molekulargewicht und im Restextrakt zwischen der Rand- und Mittelzone der strömenden Schmelze klein gehalten werden. Solche Unterschiede sind durch die zeitlich ablaufende Nachkondensation in Verbindung mit dem Strömungsprofil zu erwarten, je nachdem wie stark das Polykondensationsgleichgewicht durch die Einspeisung des Stickstoffs gestört wurde.

In Abhängigkeit der Parameter des herzustellenden Polymerisates wird die Polyamidschmelze aufeinanderfolgend in ein- oder mehreren Stufen in Reaktionsbehältern erfindungsgemäß behandelt und dabei am unteren Teil des Reaktionsbehälters kontinuierlich abgezogen und in den der Stufe folgenden Reaktionsbehälter eingetragen. Nach Austritt der Schmelze aus der letzten Stufe des Reaktionsbehälters wird die Schmelze mittels eines Wärmetauschers abgekühlt und die gewonnene Wärme zur Vorwärmung des monomeren Ausgangsproduktes, z.B. bei Polyamid-6-Schmelze für die Vorwärmung des Caprolactams, genutzt. Das bei der Behandlung von Polyamid-6-Schmelze mit Stickstoff ausgetriebene Caprolactam wird im oberen Bereich des Reaktionsbehälters über eine ummantelte Rohrleitung einem Sammelbehälter zugeführt.

Da bei der Beaufschlagung von Polyamid-6-Schmelze oder Copolyamid, dessen Teilausgangsprodukt Caprolactam war, neben Caprolactam auch Oligomere ausgetrieben werden, die die Rohrleitungen zum Sammelbehälter zusetzen können, wird vorzugsweise das in dem Sammelbehälter gesammelte Material kontinuierlich über eine weitere Rohrleitung durch die von den einzelnen Stufen zum Sammelbehälter führenden Rohrleitungen umgewälzt. Die Rohrleitungen werden vorzugsweise beheizt, wobei das anfallende Caprolactam-Oligomerengemisch auf eine solche Temperatur aufgewärmt wird, daß die Oligomere im Caprolactam gelöst werden.

Das ausgetriebene Caprolactam sowie die hierbei gleichzeitig ausgetriebenen Oligomere können aufbereitet als ein Teil des Ausgangsmaterials der Polymerisationsanlage zugeführt werden.

Bei den erfindungsgemäßen Verfahren und der Vorrichtung zur Durchführung des Verfahrens wird das chemische Gleichgewicht der Ausgangsschmelze mit dem Eintritt in die erste Reaktionsstufe durch die Beaufschlagung mit Stickstoff stetig gezielt gestört.

In nachfolgenden Reaktionsstufen wird durch weitere Behandlung einer solchen Schmelze mit Stickstoff eine Gleichgewichtseinstellung der Schmelze verhindert, wobei das in der Phase der Bildung von Amidgruppen (-NHCO-) durch Kondensation linearer Polymerer entstehende Wasser stetig ausgetrieben und damit eine hohe Reaktionsgeschwindigkeit erreicht wird.

Durch die Behandlung der Polyamidschmelze mit trockenem vorgewärmten Stickstoff kommt es zu einem starken Viskositätsanstieg, der es ermöglicht, eine Polyamidschmelze mit einer Lösungsviskosität von mehr als 3,8 herzustellen. Um die Viskosität, die durch die Beaufschlagung mit trockenem Stickstoff stark vergrößert wird, gegebenenfalls zu verringern oder auf einen gewünschten Wert einzustellen, ist vorgesehen, in einer oder mehreren Stufen, gegebenenfalls zusätzlich zu dem Stickstoff überhitzten Wasserdampf zum Auffeuchten des Stickstoffs zuzuführen. Soll eine niederviskose Polyamidschmelze hergestellt werden, wird zu Beginn des Polymerisationsprozesses dem Ausgangsprodukt ein Kettenstabilisator zugesetzt. Es entsteht ein hochstabilisiertes Polymerisat mit sehr geringem Nachkondensationsverhalten.

Die erhaltene sich nicht im chemischen Gleichgewicht befindliche Schmelze, weist aufgrund der geringeren Anzahl von reaktionsbereiten Amino-Endgruppen eine so geringe Nachkondensation auf, daß der weitere Verarbeitungsprozeß zu Folien, Seiden und anderem nicht behindert wird.

Überraschenderweise wurde gefunden, daß durch das erfindungsgemäße Verfahren und die Vorrichtung zur Durchführung des Verfahrens der Extraktgehalt in der polymeren Schmelze sogar bis auf ≤ 1,6 % verringert wird (Extraktgehalt bezogen auf 4,5 g Polyamid in 100 ml dest. Wasser, 10 h bei 100°C am Rückflußkühler gekocht).

Gegenüber den bekannten Polymerisationsverfahren wird mit dem entwickelten Verfahren eine wesentlich günstigere Raum-Zeitausbeute erreicht.

Im Ausführungsbeispiel 1 der Erfindung wird anhand einer Vorrichtung zur Durchführung des Verfahrens die Herstellung von hochviskosem verspinnfähigem Polyamid 6 im folgenden näher erläutert:

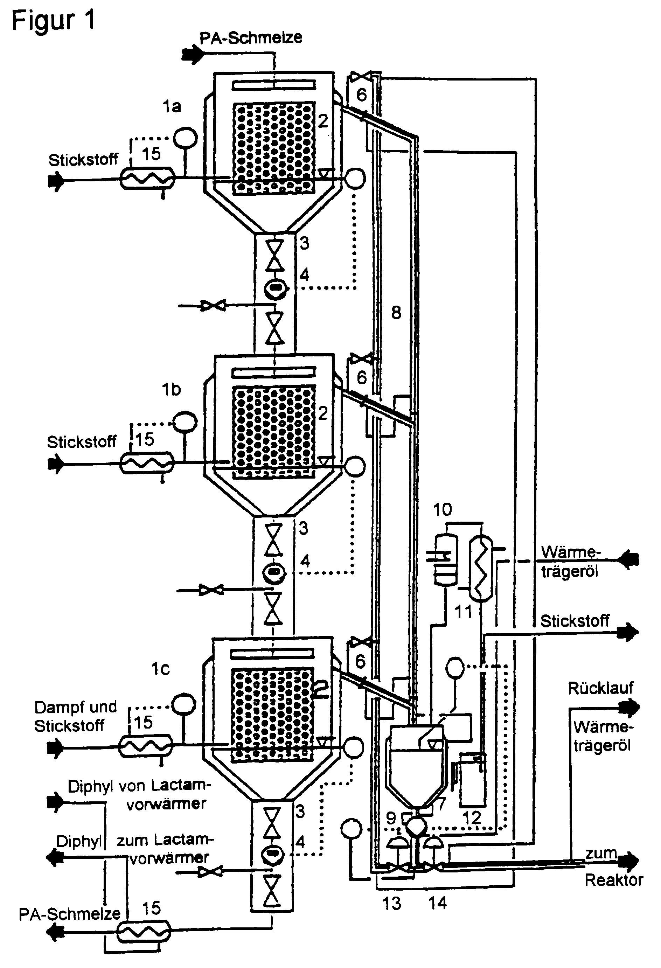

In der Zeichnung Fig. 1 ist die Ausführungsform einer Anlage zur Durchführung des Verfahrens und die Vorrichtung dargestellt.

Die beschriebene Anlage besteht aus drei Stufen 1a, 1b, 1c. In jeder der Stufen 1a bis 1c wird die Schmelze kontinuierlich in einen Reaktionsbehälter über oberflächenvergrößernde Elemente 2 geleitet, und es wird in jede Stufe Stickstoff im Temperaturbereich 250 - 280°C über den Vorwärmer 5 eingeleitet. In die Stufe la wird eine im Gleichgewichtszustand befindliche Schmelze mit einer Temperatur von 280°C eingespeist, bei der es sich um ein wasserreiches Vorpolymerisat aus einer Druckstufe oder um ein Polymerisat aus einer Nachkondensationsstufe handeln kann.

Durch den eingespeisten Stickstoff werden in jeder Stufe Caprolactam, Oligomere und das durch Kondensationsreaktion gebildete Wasser ausgetrieben, wobei in der Stufe 1a bei Einspeisung eines wasserreichen Vorpolymerisats zusätzlich das im chemischen Polykondensationsgleichgewicht enthaltene Wasser ausgetrieben wird. Caprolactam, Oligomere, Wasser und Stickstoff werden über eine im oberen Bereich der jeweiligen Stufe mündende Rohrleitung 6 in einen Sammelbehälter 7 abgeleitet.

Das gesamte Reaktorsystem ist gegenüber der Umgebungsluft durch eine Abtauchung 12 abgekapselt. Die oberflächenvergrößernden Elemente 2 sind derart ausgebildet, daß während des Ablaufens der Schmelze über diese Elemente eine ständige Oberflächenerneuerung eintritt. Im Beispiel wird dafür Streckmetallblech eingesetzt. Da die Schmelze auf den oberflächenvergrößernden Elementen 2 ab einer begrenzten Länge des Elementes zur Tropfenbildung neigt und statische Verteilervorrichtungen dieser Tropfenbildung nur geringfügig entgegenwirken, wird eine Behandlung in mehreren Stufen (1a, 1b, 1c) vorgenommen.

Dabei wird die Schmelze nach jeder Stufe mittels einer Schmelzepumpe als Austragseinrichtung 4 gleichmäßig über die gesamte Breite der oberflächenvergrößernden Elemente 2 des Reaktionsbehälters der nachfolgenden Stufe geleitet.

In jeder Verfahrensstufe wird ein geringer Schmelzesumpf zur Homogenisierung der Schmelze eingestellt, die Verweilzeit der Schmelze in diesem Sumpf beträgt ≤ 30 min. Die Gesamtverweilzeit der Schmelze in den Stufen 1a, 1b und 1c beträgt unter Berücksichtigung der Ablaufzeiten ca. 2 h.

Durch die Verdampfung von Wasser und durch verdunstendes Caprolactam wird der Polyamid-6-Schmelze Wärme entzogen. Die Aufwärmung der Schmelze auf 280°C für die nächste Stufe erfolgt bei diesem Beispiel im Schmelzesumpf und der nachgeschalteten Austragsvorrichtung, bestehend aus Schieber 3 und Schmelzepumpe 4. Der Schmelzeaustrag aus jeder Stufe erfolgt kontinuierlich.

Nach dem Austrag der Schmelze aus der letzten Stufe lc wird diese im Wärmetauscher 15 mit Diphyl von ca. 280°C auf ca. 245°C abgekühlt. Die gewonnene Wärme wird, mittels eines weiteren, nicht mit dargestellten Wärmetauschers, zur Vorwärmung des monomeren Vorproduktes, hier ε-Caprolactam, vor Eintritt in den Polymerisationsreaktor genutzt.

Das aus jedem Reaktionsbehälter 1a, 1b, 1c ausgetriebene über die Rohrleitung 6 gesammelte monomere Caprolactam enthält Oligomere, die die Rohrleitung zusetzen können. Aus diesem Grunde wird neben einer Beheizung der Rohrleitung 6 eine ebenfalls beheizte Umwälz-Rohrleitung 8 vorgesehen, die über eine Pumpe 9 aus dem Sammelbehälter 7 gespeist wird. Durch die Beheizung der Rohrleitungen wird weiterhin das anfallende Caprolactam-Oligomerengemisch auf eine derartige Temperatur aufgewärmt, daß die störenden Oligomere in Caprolactam gelöst werden.

In der Umwälz-Rohrleitung 8 wird nach der Pumpe 9 bis zum Regelventil 13 ein Druck von 7 bar (ü) eingestellt. Mit diesem Druck wird das im Sammelbehälter 7 anfallende Caprolactam-Oligomerengemisch über das Regelventil 14 in die Druckstufe der Polymerisationsanlage als Teilstrom zum Caprolactam gefördert, wobei das Regelventil 14 in Abhängigkeit des Füllstandes im Sammelbehälter 7 arbeitet.

Wird wasserreiches Vorpolymerisat in die erfindungsgemäße Vorrichtung eingespeist, so wird dieses Wasser über einen Rektifikator 10 dem Caprolactam-Oligomerengemisch im Sammelbehälter 7 entzogen. Der aus dem Rektifikator 10 austretende Wasserdampf wird im Wärmetauscher 11 kondensiert.

Bei der Behandlung der Polyamidschmelze mit trockenem Stickstoff kommt es zu einem starken Viskositätsanstieg. Wenn dieser Viskositätsanstieg zu groß ist oder wenn es erwünscht ist, die Viskosität des am Auslaß der letzten Stufe austretenden Materials genau einzustellen, so wird in einer oder mehreren Stufen zusammen mit dem Stickstoff, oder auch allein, Wasserdampf eingeleitet, wie dies anhand der Stufe 1c dargestellt ist.

Ohne die Zuführung von Wasserdampf ist es möglich, eine hochviskose, stabile Polyamid-6-Schmelze mit einer Lösungsviskosität von 3,8 und einer Amino-Endgruppen-Konzentration von 28 µ Ä/g und einem Extraktgehalt von 2,5 % herzustellen. Durch die Einleitung des Wasserdampf-Stickstoffgemisches in der letzten Verfahrensstufe ist eine Viskositätssteuerung im Bereich von 3,2 - 3,8 möglich.

Im Ausführungsbeispiel 2 wird eine Vorrichtung zur Durchführung des Verfahrens erläutert, bei welchem von der im Ausführungsbeispiel 1 aufgeführten Anordnung ausgegangen wird.

Die Einspeisung des vorgewärmten Stickstoffs erfolgt nur in der untersten Stufe 1c, worauf Stickstoff dann die darüberliegenden Stufen 1b, 1a in einer Art Reihenschaltung durchströmt, wobei zusätzlich in jeder Stufe eine Ergänzung mit Frischstickstoff erfolgt. Das anfallende Caprolactam-Oligomeren-Stickstoffgemisch wird dann nur der Stufe la entnommen und dem Sammelbehälter 7 zugeführt.

Im Ausführungsbeispiel 3 der Erfindung wird die Herstellung einer verspinnfähigen, niederviskosen Polyamid-6-Schmelze beschrieben, bei welcher von der im Ausführungsbeispiel 1 aufgeführten Anordnung ausgegangen wird.

Soll eine Polyamid-6-Schmelze mit einer Lösungsviskosität von 2,4 und unterschiedlicher Amino-Endgruppenkonzentration hergestellt werden, so gibt es dafür mehrere Möglichkeiten, wenn als Stabilisator Essigsäure eingesetzt wird.
1. Stabilisierung des Reaktorgemischs zu Beginn des Polymerisationsprozesses mit 0,34 % Essigsäure. In jeder Stufe wird vorgewärmter trockener Stickstoff von 280°C eingespeist. Dieses Polymerisat hat eine Amino-Endgruppenkonzentration von 6 µ A/g.
2. Stabilisierung des Reaktionsgemischs zu Beginn des polymerisationsprozesses mit 0,18 % Essigsäure. In jede Stufe wird vorgewärmter trockener Wasserstoff von 280°C eingespeist. Dieses Polymerisat hat eine Amino-Endgruppenkonzentration von 31 µ Ä/g.
3. Stabilisierung des Reaktionsgemischs zu Beginn des Polymerisationsprozesses mit 0,30 % Essigsäure. In die Stufen 1a und 1b wird vorgewärmter trockener Stickstoff von 280°C und in die Stufe 1c vorgewärmter trockener Wasserdampf von 280°C eingespeist.

Dieses Polymerisat hat eine Amino-Endgruppenkonzentration von 11 µ Ä/g. Bei der Einspeisung von trockenem vorgewärmten Stickstoff oder Wasserdampf oder in Kombination beider Gase wird durch das Austreiben von Caprolactam und Oligomeren aus der Polyamid-6-Schmelze ein Gesamtextrakt von ≤ 1,8 % eingestellt. Um eine störende Extraktnachbildung in der Schmelze zu vermeiden, darf die Verweilzeit der Schmelze im Sumpf vor jeder Schmelzepumpe max. 30 min betragen. Diese Schmelze ist zur Herstellung von Seiden nach dem POY- und FDY-Verfahren geeignet.

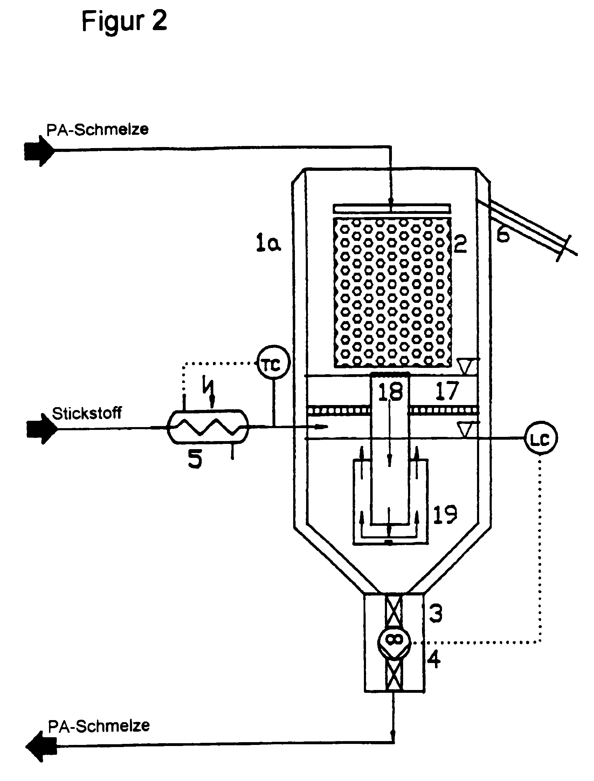

Im Ausführungsbeispiel 4 wird die Herstellung einer verspinnfähigen, hochviskosen polyamid-6-Schmelze beschrieben. Die Herstellung erfolgt dabei prinzipiell wie im Ausführungsbeispiel 1 beschrieben, nur werden zwei Reaktorstufen la und 1b verwendet, wobei zusätzlich die in der Fig. 2 dargestellte Entwässerung der Schmelze in der Stufe la vorgenommen wird.

Die Fig. 2 zeigt den Reaktionsbehälter einer Stufe mit Vorrichtung für den Direkteintrag von Stickstoff in einen Schmelzesumpf in Verbindung mit oberflächenvergrößernden Elementen aus Fig. 1.

Die Polyamid-6-Schmelze fließt über das oberflächenvergrößernde Element 2 in eine Schmelzeschicht, die über der Trenneinrichtung mit Durchbrüchen 17, beispielsweise einer Lochplatte, eingestellt wird.

Die Höhe der Schmelzeschicht wird durch die Höhe des Überlaufrohrs 18 festgelegt. Stickstoff wird über den Vorwärmer 5 unter der Trenneinrichtung mit Durchbrüchen 17 direkt durch die Polyamid-6-Schmelzeschicht geleitet. Der Stickstoff wird anschließend am Schmelzefilm des oberflächenvergrößernden Elementes 2 weitergeführt und wie bereits im Ausführungsbeispiel 1 beschrieben, gemeinsam mit dem ausgetriebenen Wasser, dem Capolactam und den Oligomeren weiterbehandelt.

Die aus der Schmelzeschicht durch das Überlaufrohr 18 ablaufende Polyamid-6-Schmelze gelangt in einen darunter bereitstehenden Schmelzesumpf, in welchem das Überlaufrohr 18 bis in die Nähe des Bodens geführt wird. Zur Einstellung einer einheitlichen Verweilzeit dieser Polyamid-6-Schmelze im unteren Schmelzesumpf wird die Schmelze durch einen nach oben offenen Behälter 19, welcher mit einer Ablaufbohrung versehen ist, wieder nach oben geführt. Bei der Ablaufbohrung handelt es sich um eine kleine Bohrung, die ein Leerlaufen der Schmelzeabtauchung 19 beim Abfahren der Polymerisationsanlage gewährleistet. Mit der Austragseinrichtung 4, beispielsweise einer Schmelzepumpe, wird die Polyamid-6-Schmelze in die darunterliegende Reaktionsstufe eingetragen bzw. der Granulierung zugeführt oder direkt weiterverarbeitet. Es entsteht ein Polymerisat mit einer Lösungsviskosität von 3,65 und einem Extraktgehalt von 2,5 %.

Diese beschriebene zusätzliche Entwässerung und Entmonomerisierung kann in einem oder mehreren Reaktionsbehältern der Stufen 1a und 1b für die Entmonomerisierung der Schmelze und zur Herstellung einer hochviskosen Schmelze eingesetzt werden.

Im Ausführungsbeispiel 5 wird die Herstellung einer verspinnfähigen normalviskosen Polyamid-6-Schmelze beschrieben. Die Herstellung erfolgt dabei prinzipiell nach dem Ausführungsbeispiel 4. Das Reaktionsgemisch wird vor Beginn des Polymerisationsprozesses mit 0,12 % Essigsäure stabilisiert. Anstelle von Stickstoff wird vorgewärmter trockener Wasserdampf von 280°C eingespeist. Das hergestellte Polymerisat hat eine Lösungsviskosität von 2,4 und eine Amino-Endgruppenkonzentration von 41 µÄ/g und einen Extraktgehalt von 2,5 %.

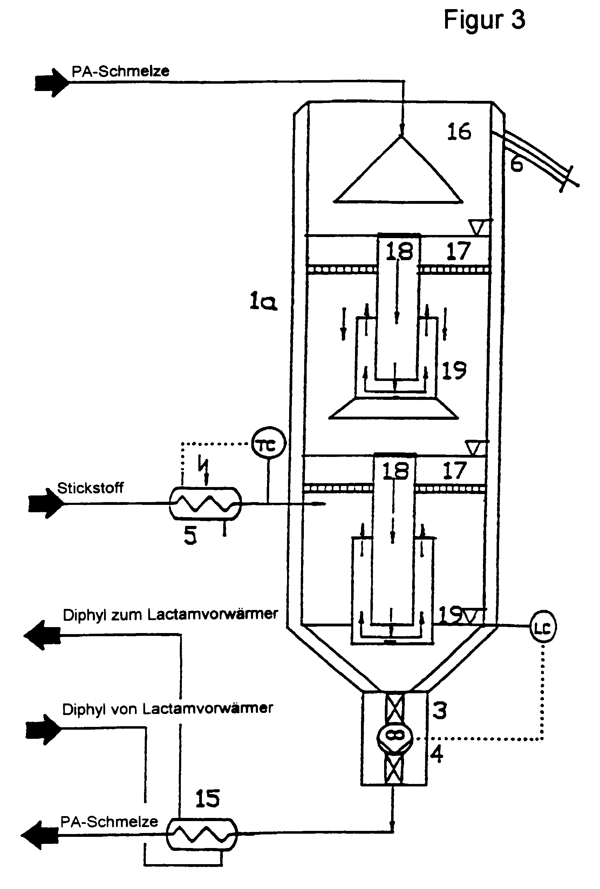

Im Ausführungsbeispiel 6 wird die Herstellung einer verspinnfähigen, hochviskosen Polyamid-6-Schmelze beschrieben. In der Zeichnung Fig. 3 ist die Ausführungsform einer Anlage zur Durchführung des Verfahrens und die Vorrichtung dargestellt. Über den Schmelzeverteiler 16 wird eine im Gleichgewichtszustand befindliche Polyamid-6-Schmelze in die darunter befindliche Schmelzeschicht eingetragen, die über der Trenneinrichtung mit Durchbrüchen 17, beispielsweise einer Lochplatte, eingestellt wird. Die Höhe der Schmelzeschicht wird durch die Höhe des Überlaufrohres 18 festgelegt. Die aus der Schmelzeschicht durch das Überlaufrohr 18 ablaufende Polyamid-6-Schmelze gelangt in eine darunter befindliche Schmelzeabtauchung 19, die für Restentleerung an der untersten Stelle eine kleine Bohrung besitzt. Die überlaufende Schmelze aus der Schmelzeabtauchung 19 läuft an der Behälterwand ab auf einen Schmelzeverteiler und von diesem in die darunter befindliche Schmelzeschicht. Während des Ablaufens der Schmelze an der Behälterwand und auf dem Verteiler erfolgt eine Trennung des Stickstoffs von der Schmelze.

Aus der unteren Schmelzeschicht, über der Trenneinrichtung mit Durchbrüchen 17, läuft die Schmelze ebenfalls über das Ablaufrohr 18 in die Schmelzeabtauchung 19 und über deren Behälterwand in den Schmelzesumpf am Grund des Reaktionsbehälters. Stickstoff wird über den Vorwärmer 5, unterhalb der am tiefsten gelegenen Trenneinrichtung 17 durch die Polyamid-6-Schmelze gedrückt, der danach die darüber befindlichen Schmelzeschichten durchströmt.

Dabei werden der Polyamid-6-Schmelze Caprolactam, Oligomere und Wasser entzogen. Dieses Gemisch verläßt über die Rohrleitung 6 den Reaktionsapparat und wird wie im Ausführungsbeispiel 1 beschrieben weiterbehandelt. Nach dem Austrag der Schmelze aus diesem Reaktor wird diese im Wärmetauscher 15, wie im Beispiel 1 beschrieben, abgekühlt.

Zur Einstellung einer höheren Viskosität und/oder zur Einstellung eines niedrigeren Extraktgehaltes in der Polyamid-6-Schmelze kann die Anzahl der einzelnen Stufen in diesem Reaktor erhöht werden.

## Patentansprüche

1. Verfahren zur Herstellung von hochviskosen oder hochstabilisierten Polyamiden mit reaktionsbereiten Amino-Endgruppen von < 50 µÄ/g und zur kontinuierlichen Entmonomerisierung von Polyamiden, indem eine Schmelze, die ein chemisches Gleichgewicht aufweist, durch Entzug des niedermolekularen Polykondensationsproduktes nachkondensiert wird,
dadurch gekennzeichnet, daß die Schmelze kontinuierlich in einen Reaktionsbehälter eingetragen und mit vorgewärmtem, trockenen Stickstoff in innige Berührung oder Vermischung gebracht wird und eine Verweilzeit der Schmelze in einem Sumpf im unteren Teil des Reaktionsbehälters ≤ 30 min. vor dem kontinuierlichen Austrag eingestellt wird, wobei ausgetriebene Stoffe über Rohrleitungen gesammelt werden und in einen Sammelbehälter eingebracht, stetig umgewälzt und aufbereitet einem Polymerisationsreaktor zugeführt wird.

2. Verfahren nach Anspruch 1,
dadurch gekennzeichnet, daß ε-Caprolactam zu Polyamid 6 umgesetzt wird.

3. Verfahren nach Anspruch 1,
dadurch gekennzeichnet, daß die Polyamid-Schmelze im Reaktionsbehälter über oberflächenvergrößernde und gleichzeitig stetig oberflächenerneuernde Elemente geleitet und dabei mit Stickstoff beaufschlagt wird.

4. Verfahren nach Anspruch 1,
dadurch gekennzeichnet, daß die Polyamid-Schmelze im Reaktionsbehälter in eine Schmelzeschicht geleitet, die über eine Trenneinrichtung mit Durchbrüchen gebildet wird, wobei Stickstoff unterhalb der Trenneinrichtung durch diese Schmelzeschicht gedrückt und die Schmelze über eine Austragseinrichtung, welche vertikal durch die Trenneinrichtung bis in den Schmelzesumpf am Reaktionsbehälterboden reicht, dem Sumpf im unteren Teil des Reaktionsbehälters zugeführt wird.

5. Verfahren nach Anspruch 1 bis 4,
dadurch gekennzeichnet, daß die Polyamid-Schmelze über oberflächenvergrößernde Elemente in einer über der Trenneinrichtung mit Durchbrüchen gebildete Schmelzeschicht geleitet wird.

6. Verfahren nach Anspruch 1 bis 5,
dadurch gekennzeichnet, daß der Stickstoff vor seinem Eintritt in den Reaktionsbehälter, oberhalb des Niveaus des im unteren Teil des Reaktionsbehälters bestehenden Schmelzesumpfes, auf Temperaturen bis 300°C vorgewärmt wird.

7. Verfahren nach Anspruch 1 bis 6,
dadurch gekennzeichnet, daß die Polyamid-Schmelze aufeinanderfolgend in mehreren Stufen in Reaktionsbehältern behandelt und am unteren Teil des Reaktionsbehälters kontinuierlich abgezogen, in den der Stufe folgenden Reaktionsbehälter eingetragen wird.

8. Verfahren nach Anspruch 6 und 7,
dadurch gekennzeichnet, daß der vorgewärmte Stickstoff in die unterste Stufe eingespeist wird und in einer Art Reihenschaltung die darüber liegenden Stufen durchströmt.

9. Verfahren nach Anspruch 6,7 und 8,
dadurch gekennzeichnet, daß zusätzlich in jede über der untersten Stufe liegenden Stufe vorgewärmter Frischstickstoff eingespeist wird.

10. Verfahren nach Anspruch 6,7 und 9,
dadurch gekennzeichnet, daß zumindestens in einer Stufe zusätzlich zu dem Stickstoff Wasserdampf, insbesondere Wasserdampf im Temperaturbereich bis 300°C zugeführt wird.

11. Verfahren nach Anspruch 1 und 7,
dadurch gekennzeichnet, daß im oberen Teil des Reaktionsbehälters ausgetriebenes Caprolactam und/oder oligomeres Caprolactam über Rohrleitungen einem Sammelbehälter zugeführt wird.

12. Verfahren nach Anspruch 11,
dadurch gekennzeichnet, daß die das Caprolactam und/oder das oligomere Caprolactam führenden Rohrleitungen beheizt sind und daß das in dem Sammelbehälter gesammelte Caprolactam und/oder das oligomere Caprolactam kontinuierlich in diesen Rohrleitungen umgewälzt wird.

13. Verfahren nach Anspruch 1, 7, 11 und 12,
dadurch gekennzeichnet, daß sowohl die einzelnen Stufen als auch der Sammelbehälter für das Caprolactam und/oder das oligomere Caprolactam gegen Umgebungsluft abgekapselt werden.

14. Verfahren nach Anspruch 1, 7, 11 bis 13,
dadurch gekennzeichnet, daß das im ausgetriebenen Caprolactam und/oder im oligomeren Caprolactam überschüssige Wasser mittels eines Rektifikators abgetrennt und abgeführt wird.

15. Verfahren nach Anspruch 11 bis 13,
dadurch gekennzeichnet, daß das im Sammelbehälter gesammelte Caprolactam und/oder oligomere Caprolactam einem Polymerisationsreaktor zugeführt wird.

16. Vorrichtung zur Herstellung von hochviskosen oder hochstabilisierten Polyamiden mit reaktionsbereiten Amino-Endgruppen von < 50µÄ/g und zur kontinuierlichen Entmonomerisierung von Polyamiden, indem eine Schmelze, die ein chemisches Gleichgewicht aufweist, durch Entzug des niedermolekularen Polykondensationsprodukts nachkondensiert wird,
dadurch gekennzeichnet,
daß die Vorrichtung aus einem von Polyamid-Schmelze durchflossenen Reaktionsbehälter (1a) besteht, der eine horizontale Trenneinrichtung mit Durchbrüchen (17) und mindestens ein Überlaufrohr (18), welches durch die Trenneinrichtung hindurch in der Nähe des Reaktionsbehälterbodens in einen nach oben offenen Behälter (19) mündet oder der Reaktionsbehälter (1a) im oberen Teil oberflächenvergrößernde Elemente (2) enthält und am Reaktionsbehälterboden Schieber (3) und Schmelzeaustragseinrichtung (4) aufweist und am Reaktionsbehälter (1a) eine Eintragseinrichtung mit Vorwärmer (5) für Stickstoff sowie im oberen Bereich eine Austragseinrichtung mit Rohrleitung (6) angeordnet sind, welcher ein Aufbereitungssystem nachgeordnet ist.

17. Vorrichtung nach Anspruch 16,
dadurch gekennzeichnet, daß der Reaktionsbehälter (la) eine Trenneinrichtung mit Durchbrüchen (17) und zusätzlich im oberen Teil oberflächenvergrößernde Elemente (2), beispielweise Streckmetallblech, enthält.

18. Vorrichtung nach Anspruch 16,
dadurch gekennzeichnet, daß der Reaktionsbehälter (1a) einen Schmelzeverteiler (16) und mindestens zwei übereinander angeordnete Trenneinrichtungen mit Durchbrüchen (17) mit jeweils mindestens einem Überlaufrohr (18) und nach oben offene Behälter (19) enthält.

19. Vorrichtung nach Anspruch 16 bis 18,
dadurch gekennzeichnet, daß die Eintragseinrichtung mit Vorwärmer (5) für Stickstoff oberhalb des Niveaus des im unteren Teil des Reaktionsbehälters (1a) bestehenden Schmelzesumpfes und unterhalb einer Trenneinrichtung mit Durchbrüchen (17) angeordnet ist.

20. Vorrichtung nach Anspruch 16,
dadurch gekennzeichnet, daß insbesondere bei einem von Polyamid-6-Schmelze durchflossenen Reaktionsbehälter (1a) die Austragseinrichtung für Caprolactam eine ummantelte Rohrleitung (6) ist und im oberen Bereich des Reaktionsbehälters (la), mindestens oberhalb des über einer Trenneinrichtung mit Durchbrüchen (17) bestehenden Schmelzeniveaus, angeordnet ist.

21. Vorrichtung nach Anspruch 16 bis 20,
dadurch gekennzeichnet, daß in mehreren Stufen bis zu 8 Reaktionsbehälter (1a, 1b, 1c ...) in Reihe miteinander verbunden sind.

22. Vorrichtung nach Anspruch 19 und 21,
dadurch gekennzeichnet, daß eine Eintragseinrichtung mit Vorwärmer (5) für trockenen Stickstoff mindestens am Reaktionsbehälter (1c) der letzten Stufe angeordnet ist und in Reihe nacheinander mit den davorliegenden Reaktionsbehältern (1b, 1a) für den Strickstoffeintrag eine Verbindung besteht.

23. Vorrichtung nach Anspruch 20,
dadurch gekennzeichnet, daß die ummantelte Rohrleitung (6) in den oberen Teil des Sammelbehälters (7) mündet und vom Ausgang des Sammelbehälters (7) aus die ummantelte Rohrleitung (8) über die Pumpe (9) und das Druckventil (13) mit der Rohrleitung (6) in Nähe der Caprolactam-Austragseinrichtung des Reaktionsbehälters (1a, 1b, 1c) verbunden ist.

24. Vorrichtung nach Anspruch 20 und 23,
dadurch gekennzeichnet, daß am oberen Teil des Sammelbehälters (7) eine Leitung angeordnet ist, die diesen mit einen Rektifikator (10), einen Wärmetauscher (11) und einer Abtauchung (12) verbindet.

25. Vorrichtung nach Anspruch 20,23 und 24,
dadurch gekennzeichnet, daß am Ausgang des Sammelbehälters (7) nach der Pumpe (9) eine Rohrleitung über das Regelventil (14) zum Polymerisationsreaktor geführt ist.

26. Vorrichtung nach Anspruch 16,19,21 und 22,
dadurch gekennzeichnet, daß die Schmelze-Austragseinrichtung (4) der letzten Reaktionsstufe mit dem Wärmetauscher (17) verbunden ist.

## Claims

1. A process for producing high-viscosity or highly stabilised polyamides with reactive amino end groups of 50 µEq/g and for continuously demonomerising polyamides, a melt exhibiting chemical equilibrium being post-condensed by removal of the low molecular weight polycondensation product, characterised in that the melt is introduced continuously into a reaction vessel and brought into intimate contact or intimately mixed with preheated dry nitrogen and a residence time ≤ 30 mins is set for the melt in a sump in the lower part of the reaction vessel prior to continuous discharge, wherein expelled substances are collected via pipelines and introduced into a collecting vessel, caused to circulate continuously and fed in recycled manner to a polymerisation stage.

2. A process according to claim 1, characterised in that ε-caprolactam is reacted to form polyamide 6.

3. A process according to claim 1, characterised in that the polyamide melt in the reaction vessel is passed over surface area-enlarging and simultaneously constantly surface-renewing elements and perfused with nitrogen.

4. A process according to claim 1, characterised in that the polyamide melt in the reaction vessel is passed into a melt layer which is formed by means of a separating device with perforations, wherein nitrogen is forced beneath the separating device through this melt layer and the melt is supplied to the sump in the lower part of the reaction vessel via a discharge device which extends vertically through the separating device as far as the melt sump at the reaction vessel bottom.

5. A process according to claims 1 to 4, characterised in that the polyamide melt is passed over surface area-enlarging elements in a melt layer formed above the separating device having perforations.

6. A process according to claims 1 to 5, characterised in that the nitrogen is preheated to temperatures of up to 300°C prior to entry into the reaction vessel, above the level of the melt sump located in the lower part of the reaction vessel.

7. A process according to claims 1 to 6, characterised in that the polyamide melt is processed in reaction vessels successively in a plurality of stages and drawn off continuously at the lower part of the reaction vessel and introduced into the reaction vessel of the following stage.

8. A process according to claim 6 and 7, characterised in that the preheated nitrogen is introduced into the lowest stage and flows through the stages located thereabove in a type of series arrangement.

9. A process according to claims 6, 7 and 8, characterised in that preheated fresh nitrogen is additionally introduced into each stage located above the lowest stage.

10. A process according to claims 6, 7 and 9, characterised in that steam, in particular steam in a temperature range of up to 300°C, is fed into at least one stage in addition to the nitrogen.

11. A process according to claims 1 and 7, characterised in that caprolactam expelled in the upper part of the reaction vessel and/or oligomeric caprolactam is fed to a collecting vessel via pipelines.

12. A process according to claim 11, characterised in that the pipelines conveying the caprolactam and/or the oligomeric caprolactam are heated and in that the caprolactam collected in the collecting vessel and/or the oligomeric caprolactam is circulated continuously in these pipelines.

13. A process according to claims 1, 7, 11 and 12, characterised in that both the individual stages and the collecting vessel for the caprolactam and/or oligomeric caprolactam are sealed off from the ambient air.

14. A process according to claims 1, 7 and 11 to 13, characterised in that the surplus water in the expelled caprolactam and/or in the oligomeric caprolactam is separated and removed by means of a rectifier.

15. A process according to claims 11 to 13, characterised in that the caprolactam and/or oligomeric caprolactam collected in the collecting vessel is fed to a polymerisation reactor.

16. A device for producing high-viscosity or highly stabilised polyamides with reactive amino end groups of 50 µEq/g and for continuously demonomerising polyamides, a melt exhibiting chemical equilibrium being post-condensed by removal of the low molecular weight polycondensation product,
characterised in that
the device consists of a reaction vessel (1a), through which polyamide melt flows and which comprises a horizontal separating device with perforations (17) and at least one overflow pipe (18), which opens through the separating device in the vicinity of the reaction vessel bottom into a vessel (19), open at the top, or the reaction vessel (1a) contains surface area-enlarging elements (2) in the upper part and at the reaction vessel bottom comprises a slide (3) and a melt discharge device (4), an input device with preheater (5) for nitrogen being arranged on the reaction vessel (la) and a discharge device with pipeline (6) being arranged in the upper region, downstream of which there is arranged a recycling system.

17. A device according to claim 16, characterised in that the reaction vessel (la) contains a separating device with perforations (17) and additionally surface area-enlarging elements (2), for example expanded sheet metal, in the upper part.

18. A device according to claim 16, characterised in that the reaction vessel (1a) contains a manifold (16) and at least two separating devices with perforations (17) arranged one above the other and each having at least one overflow pipe (18), and vessels (19) open at the top.

19. A device according to claims 16 to 18, characterised in that the input device with preheater (5) for nitrogen is arranged above the level of the melt sump located in the lower part of the reaction vessel (1a) and below a separating device with perforations (17).

20. A device according to claim 16, characterised in that, in particular in the case of a reaction vessel (1a) through which polyamide 6 melt flows, the discharge device for caprolactam is a sheathed pipeline (6) and is arranged in the upper area of the reaction vessel (1a), at least above the melt level located above a separating device with perforations (17).

21. A device according to claims 16 to 20, characterised in that up to 8 reaction vessels (1a, 1b, 1c ...) are connected together in series in a plurality of stages.

22. A device according to claims 19 and 21, characterised in that an input device with preheater (5) for dry nitrogen is arranged at least on the reaction vessel (lc) of the last stage and there is a connection for nitrogen input in series with the preceding reaction vessels (1b, 1a).

23. A device according to claim 20, characterised in that the sheathed pipeline (6) opens into the upper part of the collecting vessel (7) and, from the output of the collecting vessel (7), the sheathed pipeline (8) is connected via the pump (9) and the pressure valve (13) with the pipeline (6) in the vicinity of the caprolactam discharge device of the reaction vessel (1a, 1b, 1c).

24. A device according to claims 20 and 23, characterised in that a line is arranged at the upper part of the collecting vessel (7), which connects the latter with a rectifier (10), a heat exchanger (11) and an immersed tube unit (12).

25. A device according to claims 20, 23 and 24, characterised in that, at the output of the collecting vessel (7) downstream of the pump (9), a pipeline passes via the control valve (14) to the polymerisation reactor.

26. A device according to claims 16, 19, 21 and 22, characterised in that the melt discharge device (4) of the last reaction stage is connected with the heat exchanger (17).

## Revendications

1. Procédé de préparation de polyamides très visqueux ou très stabilisés contenant moins de 50 µéq/g de groupes amino terminaux réactifs et de séparation continue des monomères de polyamides, dans lequel une masse fondue présentant un équilibre chimique est soumise à une poursuite de la condensation par extraction du produit de polycondensation de faible masse molaire, caractérisé en ce que l'on introduit en continu la masse fondue dans un récipient de réaction et on la met en contact ou en mélange intime avec de l'azote sec préchauffé, et on établit un temps de séjour inférieur ou égal à 30 minutes de la masse fondue dans un résidu dans la partie inférieure du récipient de réaction avant de la soutirer de manière continue, les produits séparés étant collectés par des conduites et introduits dans un récipient collecteur, remis continuellement en circulation et envoyés traités dans un réacteur de polymérisation.

2. Procédé selon la revendication 1, caractérisé en ce que l'on transforme de l'ε-caprolactame en polyamide 6.

3. Procédé selon la revendication 1, caractérisé en ce que la masse fondue de polyamide est amenée dans le récipient de réaction en passant sur des éléments agrandissant la surface et en même temps renouvelant continuellement la surface et est alors mise en contact avec l'azote.

4. Procédé selon la revendication 1, caractérisé en ce que la masse fondue de polyamide dans le récipient de réaction est amenée dans une couche de masse fondue formée au-dessus d'un dispositif de séparation à ouvertures, l'azote étant comprimé au-dessous du dispositif de séparation par cette couche de masse fondue, et la masse fondue est amenée dans le résidu dans la partie inférieure du récipient de réaction, en passant pas un dispositif de sortie qui, disposé verticalement, traverse le dispositif de séparation et va jusqu'au fond du récipient de réaction.

5. Procédé selon les revendications 1 à 4, caractérisé en ce que la masse fondue de polyamide est amenée, en passant par des éléments agrandissant la surface, dans une couche de masse fondue formée au-dessus du dispositif de séparation à ouvertures.

6. Procédé selon les revendications 1 à 5, caractérisé en ce que l'azote est préchauffé à des températures allant jusqu'à 300°C avant d'entrer dans le récipient de réaction, au-dessus du niveau du résidu de masse fondue se trouvant dans la partie inférieure du récipient de réaction.

7. Procédé selon les revendications 1 à 6, caractérisé en ce que la masse fondue de polyamide est traitée successivement en plusieurs paliers dans des récipients de réaction, est soutirée en continu à la partie inférieure du récipient de réaction, et est introduite dans le récipient de réaction suivant le palier.

8. Procédé selon les revendications 6 et 7, caractérisé en ce que l'azote préchauffé est introduit dans le palier le plus bas et traverse les paliers situés au-dessus à la manière d'un montage en série.

9. Procédé selon les revendications 6, 7 et 8, caractérisé en ce que l'on fait passer en outre, dans chacun des paliers situés au-dessus du palier le plus bas, de l'azote frais préchauffé.

10. Procédé selon les revendications 6, 7 et 9, caractérisé en ce que l'on envoie, dans au moins l'un des paliers, de la vapeur d'eau en plus de l'azote, en particulier de la vapeur d'eau à une température allant jusqu'à 300°C.

11. Procédé selon les revendications 1 et 7, caractérisé en ce que, dans la partie supérieure du récipient de réaction, le caprolactame et/ou le caprolactame oligomère est amené par des conduites dans un récipient collecteur.

12. Procédé selon la revendication 11, caractérisé en ce que les conduites d'amenée du caprolactame et/ou du caprolactame oligomère sont chauffées et en ce que le caprolactame et/ou le caprolactame oligomère collecté dans le récipient collecteur est remis continuellement en circulation dans ces conduites.

13. Procédé selon les revendications 1, 7, 11 et 12, caractérisé en ce que les différents paliers et le récipient collecteur pour le caprolactame et/ou le caprolactame oligomère sont isolés de l'air environnant.

14. Procédé selon les revendications 1, 7, 11 à 13, caractérisé en ce que l'on sépare et on enlève l'eau en excès dans le caprolactame et/ou le caprolactame oligomère séparés à l'aide d'un appareil de rectification.

15. Procédé selon les revendications 11 à 13, caractérisé en ce que l'on amène le caprolactame et/ou le caprolactame oligomère collectés dans le récipient collecteur à un réacteur de polymérisation.

16. Dispositif pour la préparation de polyamides très visqueux ou très stabilisés contenant moins de 50 µéq/g de groupes amino terminaux réactifs et pour la séparation continue des monomères de polyamides, dans laquelle une masse fondue présentant un équilibre chimique est soumise à une poursuite de la condensation par extraction du produit de polycondensation de faible masse molaire, caractérisé en ce que le dispositif est constitué d'un récipient de réaction (1a) traversé par le courant de masse fondue de polyamide, qui contient un dispositif de séparation horizontal à ouvertures (17) et au moins un tuyau de trop-plein (18) qui, en passant à travers le dispositif de séparation, débouche à proximité du fond du récipient de réaction dans un récipient (19) ouvert en haut, ou le récipient de réaction (1a) contient dans la partie supérieure des éléments agrandissant la surface (2) et au fond du récipient de réaction un robinet-vanne (3) et un dispositif de sortie de la masse fondue (4), et le récipient de réaction (1a) comporte un dispositif d'introduction muni d'un appareil de préchauffage (5) pour l'azote, ainsi que, dans la partie supérieure, un dispositif de sortie avec une conduite (6) après lequel est disposé un système de traitement.

17. Dispositif selon la revendication 16, caractérisé en ce que le récipient de réaction (1a) contient un dispositif de séparation à ouvertures (17) et en outre, dans la partie supérieure, des éléments agrandissant la surface (2), par exemple une plaque de métal déployé.

18. Dispositif selon la revendication 16, caractérisé en ce que le récipient de réaction (1a) contient un appareil de distribution de la masse fondue (16) et au moins deux dispositifs de séparation à ouvertures (17) superposés avec à chaque fois un tuyau de trop-plein (18) et un récipient (19) ouvert en haut.

19. Dispositif selon les revendications 16 à 18, caractérisé en ce que le dispositif d'introduction muni d'un appareil de préchauffage (5) pour l'azote est disposé au-dessus du niveau du résidu de masse fondue se trouvant dans la partie inférieure du récipient de réaction (1a) et au-dessous d'un dispositif de séparation à ouvertures (17).

20. Dispositif selon la revendication 16, caractérisé en ce que, en particulier dans le cas d'un récipient de réaction (1a) traversé par un courant de masse fondue de polyamide 6, le dispositif de sortie pour le caprolactame est une conduite (6) munie d'une gaine, et est disposé dans la partie supérieure du récipient de réaction (1a), au moins au-dessus du niveau de la masse fondue se trouvant au-dessus d'un dispositif de séparation à ouvertures (17).

21. Dispositif selon les revendications 16 à 20, caractérisé en ce que, en plusieurs paliers, jusqu'à 8 récipients de réaction (1a, 1b, 1c...) sont reliés entre eux en série.

22. Dispositif selon les revendications 19 et 21, caractérisé en ce qu'un dispositif d'introduction muni d'un appareil de préchauffage (5) pour l'azote sec est disposé au moins sur le récipient de réaction (1c) du dernier palier et en ce qu'il y a une liaison en série avec les récipients de réaction (1b, 1a) précédents pour l'introduction d'azote.

23. Dispositif selon la revendication 20, caractérisé en ce que la conduite (6) munie d'une gaine débouche dans la partie supérieure du récipient de collecte (7) et la conduite munie d'une gaine (8) issue de la sortie du récipient de collecte (7) est reliée par l'intermédiaire de la pompe (9) et de la vanne de pression (13) à la conduite (6) à proximité du dispositif de sortie du caprolactame du récipient de réaction (1a, 1ab, 1c).

24. Dispositif selon les revendications 20 et 23, caractérisé en ce que, à la partie supérieure du récipient de collecte (7), est disposée une conduite qui relie ce dernier avec un appareil de rectification (10), un échangeur de chaleur (11) et un système d'isolation par immersion (12).

25. Dispositif selon les revendications 20, 23 et 24, caractérisé en ce que, à la sortie du récipient de collecte (7), après la pompe (9), une conduite mène au réacteur de polymérisation en passant par la vanne de réglage (14).

26. Dispositif selon les revendications 16, 19, 21 et 22, caractérisé en ce que le dispositif de sortie de la masse fondue (4) du dernier palier de réaction est relié à l'échangeur de chaleur (17).
